# EUROPÄISCHE PATENTSCHRIFT

(11) **EP 3 992 462 B1**
(45) Veröffentlichungstag und Bekanntmachung des Hinweises auf die Patenterteilung: **01.04.2026**
(21) Anmeldenummer: 21205294.8
(22) Anmeldetag: 28.10.2021
(51) Int. Cl.: F04D 1/00, F04D 13/06, F04D 29/02, F04D 29/046, F04D 29/049, F04D 29/58, F04D 29/62, F04D 29/66, F16C 27/06, H02K 5/173, H02K 7/14

(54) **KREISELPUMPE**
CENTRIFUGAL PUMP
POMPE CENTRIFUGE

(30) Priorität: 29.10.2020 LU 102171
(43) Veröffentlichungstag der Anmeldung: 04.05.2022
(73) Patentinhaber: WILO SE, 44263 Dortmund (DE)
(72) Erfinder: SEIF, Vladimir, 44263 Dortmund (DE); SOYUBEY, Ismet Sacit, 44263 Dortmund (DE)
(74) Vertreter: Michalski Hüttermann & Partner Patentanwälte mbB

(56) Entgegenhaltungen:
- EP-A2- 0 520 303
- EP-A2- 2 505 850
- GB-A- 637 888
- JP-A- H11 252 851
- US-A- 3 483 407
- US-A1- 2004 134 708

## Beschreibung

### Technisches Gebiet

Die Erfindung betrifft eine Kreiselpumpe mit einem Motor aufweisend ein Gehäuse und eine darin angeordnete Rotorwelle mit einer Antriebsseite und einer gegenüberliegenden Nichtantriebsseite, und einem der Antriebsseite zugeordneten Antriebslager zum drehbaren Lagern der Rotorwelle, einer zwischen dem Antriebslager und dem Gehäuse vorgesehenen Antriebsseitenlageraufnahme, und einem der Nichtantriebsseite zugeordneten Nichtantriebslager zum ebensolchen drehbaren Lagern der Rotorwelle, einer zwischen dem Nichtantriebslager und dem Gehäuse vorgesehenen Nichtantriebsseitenlageraufnahme.

### Hintergrund der Erfindung

Kreiselpumpen sind aus dem Stand der Technik bekannt und diesen zur Förderung eines Fluids mittels einer Drehbewegung eines in der Kreiselpumpe vorgesehenen Laufrades. Das Laufrad wird mittels einer Rotorwelle durch einen Motor der Kreiselpumpe angetrieben. Vor allem schnell drehende Rotorwellen benötigen eine hohe Wuchtgüte, damit der Motor inklusive Rotorwelle und Laufrad möglichst vibrationsarm ist. Fertigungstechnisch ist eine hohe Wuchtgüte jedoch nur mit einem hohen und Aufwand und derart teuer zu erreichen.

Eine aus diesem Grund oftmals gewählte Variante ist das 'weiche' Lagern der Rotorwelle, wodurch sich bei hohen Drehzahlen eine mögliche Unwucht der Rotorwelle kompensieren lässt. Die Lagerung der Rotorwelle muss diesem Zweck entsprechend radiale und axiale Schwingungen abfedern und entsprechend dämpfen können. Aufgrund von Spaltmaßen ist eine Auslenkung der Rotorwelle trotz eine solche Weichlagerung jedoch axial als auch radial zu begrenzen. Ferner hat die Weichlagerung möglichst wenig Bauraum einnehmen.

US 2004/134708 A1 beschreibt eine elektrohydraulische Servolenkvorrichtung umfassend einen Motor, der eine Drehwelle aufweist und mit einem Lager zum drehbaren Lagern der Drehwelle versehen ist, eine Hydraulikpumpe, die an einem Ende der Drehwelle des Motors angeordnet ist und durch den Motor angetrieben wird, einen ersten elastischen Körper zum Lagern des Lagers, und einen zweiten elastischen Körper zum Drücken des Lagers in einer axialen Richtung.

EP 0 520 303 A2 beschreibt ein Gleitlager mit einem elastischen Mantel für die Motorwelle eines Nasslaufmotors einer Kreiselpumpe, wobei der Mantel des Gleitlagers an wenigsten einem Ende mit einer radialen, ein Durchtrittsloch für die Motorwelle aufweisenden Zusatzwand versehen ist und die Zusatzwand im Randbereich ihres Durchtrittsloches als Berührungsdichtung für die Motorwelle ausgebildet ist.

Die aus dem Stand der Technik bekannten Lösungen mit zwei O-Ringen für die radiale Lagerung und zwei Viereckringen für die axiale Lagerung ist nicht nur aufwendig und damit in Bezug auf die Herstellung teuer, und hat sich zudem als nicht dauerhaft zuverlässig und derart wartungsintensiv erwiesen.

### Beschreibung der Erfindung

Ausgehend von dieser Situation ist es eine Aufgabe der vorliegenden Erfindung, eine Kreiselpumpe anzugeben, deren Motorwelle in herstellungstechnisch einfacher Weise schwingungsärmer gelagert ist, wobei die schwingungsärmere Lagerung kostengünstig herstellbar ist.

Die Aufgabe der Erfindung wird durch die Merkmale des unabhängigen Anspruchs gelöst. Vorteilhafte Ausgestaltungen sind in den Unteransprüchen angegeben.

Demnach wird die Aufgabe gelöst durch eine Kreiselpumpe mit
einem Motor aufweisend ein Gehäuse und eine darin angeordnete Rotorwelle mit einer Antriebsseite und einer gegenüberliegenden Nichtantriebsseite, und
einem der Antriebsseite zugeordneten Antriebslager zum drehbaren Lagern der Rotorwelle, einer radial zwischen dem Antriebslager und dem Gehäuse vorgesehenen Antriebsseitenlageraufnahme zum thermischen Entkoppeln der Rotorwelle und des Gehäuses, und einem Sicherungsring, welcher zwischen dem Antriebslager und dem Gehäuse angeordnet ist, und
einem der Nichtantriebsseite zugeordneten Nichtantriebslager zum ebensolchen drehbaren Lagern der Rotorwelle, einer radial zwischen dem Nichtantriebslager und dem Gehäuse vorgesehenen Nichtantriebsseitenlageraufnahme zum thermischen Entkopplen der Rotorwelle und des Gehäuses, und einem Federring, welcher zwischen dem Nichtantriebslager und dem Gehäuse angeordnet ist und dessen Federkraft die Rotorwelle in Richtung der Antriebsseite beaufschlagt, wobei
die Antriebsseitenlageraufnahme und die Nichtantriebsseitenlageraufnahme eine sich wenigstens axial erstreckende Komponente aus einem flexiblen, nicht leitfähigen Material aufweist, und
an der sich axial erstreckenden Komponente innen eine Mehrzahl an dem Antriebslager und an dem Nichtantriebslager anliegender, einer radialen Bewegung der Rotorwelle entgegenwirkender Dämpfungselemente vorgesehen sind.

Ein wesentlicher Punkt der Erfindung liegt darin, dass die Dämpfungselemente wenigstens einer radialen Bewegung der Rotorwelle entgegenwirken, und derart Schwingungen abfedern und die Laufruhe erhöhen. Durch eine mögliche weiter unten beschriebene radiale Komponente der Antriebsseitenlageraufnahme und/oder der Nichtantriebsseitenlageraufnahme lassen sich Schwingungen zudem in axialer Richtung reduzieren. Gleichsam erfolgt durch den Sicherungsring und den Federring eine axiale Fixierung der Rotorwelle in Bezug auf das Gehäuse. Schließlich wird durch das thermische Entkoppeln eine Isolierung erreicht, so dass Lagerströme, die gewöhnlich zu Erosion und Beschädigung Laufbahnen der Lager führen, reduziert oder sogar vollständig vermieden werden. Die vorgeschlagene Lösung ermöglicht derart eine 'weiche' Lagerung der Rotorwelle, so dass sich insbesondere bei hohen Drehzahlen eine mögliche Unwucht der Rotorwelle kompensiert wird.

Gegenüber den aus dem Stand der Technik bekannten aufwendigen und damit teuren Lösungen mit zwei O-Ringen für die radiale Lagerung und zwei Viereckringen für die axiale Lagerung zeichnet sich die vorgeschlagene Lösung durch eine konstruktiv wesentliche einfachere Lösung bei sehr wenig Bauraum aus, die radiale als auch axiale Schwingungen abfedern und entsprechend dämpfen kann, und gleichsam dauerhaft zuverlässig und wartungsintensiv ist. Gegenüber zwei O-Ringen und zwei Viereckringen kann die Auflagefläche zwischen Lager und Gehäuse durch die vorgeschlagenen Dämpfungselemente um den Faktor 1,5 oder mehr erhöht werden, was den Oberflächendruck reduziert, die Zentrierung der Rotorwelle verbessert und schließlich auch die Dämpfung verbessert. Als Kreiselpumpe wird im Allgemeinen eine Strömungsmaschine bezeichnet, die eine Drehbewegung und dynamische Kräfte zur Förderung überwiegend von Flüssigkeiten als Fluid nutzt. Neben einer tangentialen Beschleunigung des Fluids, auch Medium genannt, wird in radialer Strömung auftretende Fliehkraft zur Förderung genutzt, so dass Kreiselpumpen ebenso als Zentrifugalpumpen bezeichnet werden. Im regulären Betrieb der Kreiselpumpe ist das Gehäuse des Motors bevorzugt oberhalb eines Pumpengehäuses angeordnet, in welchem ein von dem Motor über die Rotorwelle angetriebenes Laufrad zum Fördern des Fluid vorgesehen ist, wobei das Gehäuse des Motors mit dem Pumpengehäuse ortsfest verbunden und/oder einteilig gestaltet sein kann. Bevorzugt ragt die Motorwelle an der Antriebsseite auf dem Gehäuse des Motors in das Pumpengehäuse hinein und/oder ist an der Antriebsseite das Laufrad ortsfest mit der Motorwelle verbunden. An der Nichtantriebsseite ist die Motorwelle bevorzugt nicht aus dem Gehäuse herausgeführt. Das Fluid umfasst bevorzugt Wasser oder ein sonstiges flüssiges Medium wie beispielsweise Abwasser. Das Fluid kann Feststoffe wie beispielsweise Verunreinigungen jeglicher Art, insbesondere Fäkalien, Sedimente, Dreck, Sand, oder auch kleinere Holz-, Gestrüpp-, Textilien- oder Lappenteile oder dergleichen umfassen. Bevorzugt ist das Gehäuse des Motors aus Metall, insbesondere aus Edelstahl, und/oder das Pumpengehäuse aus Kunststoff gestaltet.

Erfindungsgemäß ist das Antriebslager und das Nichtantriebslager als Wälzlager ausgebildet, bei dem zwischen einem Innenring und einem Außenring rollende Körper den Reibungswiderstand verringern und gleichsam die Rotorwelle in Bezug auf das Gehäuse fixieren. Der Innenring, an welchem die Rotorwelle bevorzugt berührend anliegt, und/oder der Außenring, welcher bevorzugt von der Rotorwelle weg Richtung Gehäuse orientiert ist, weisen bevorzugt gehärtete Stahlflächen auf, um die Rollreibung der rollenden Körper, beispielsweise Kugeln, gering zu halten. Das Wälzlager kann insofern als Kugellager, als Zylinderrollenlager, als Nadellager, als Kegelrollenlager, als Tonnenlager oder dergleichen gestaltet sein. Thermisch entkoppelt meint dass bedingt durch die Antriebsseitenlageraufnahme und/oder die Nichtantriebsseitenlageraufnahme eine Strom-, Wärme- und/oder Kälteübertragung zwischen Motorwelle bzw. Antriebslager und/oder Nichtantriebslager sowie dem Gehäuse verringert oder unterbunden wird, insbesondere ein Kriechstrom.

Die Antriebsseitenlageraufnahme und/oder die Nichtantriebsseitenlageraufnahme umgreifen insbesondere radial umlaufend das Antriebslager und/oder das Nichtantriebslager insbesondere den Außenring desselben. Die Antriebsseitenlageraufnahme und/oder die Nichtantriebsseitenlageraufnahme ist insbesondere jeweils berührend zwischen Gehäuse und Antriebslager und/oder Nichtantriebslager vorgesehen. Bevorzugt weist die Antriebsseitenlageraufnahme und/oder die Nichtantriebsseitenlageraufnahme einen im Vergleich zum Außendurchmesser des Antriebslagers und/oder des Nichtantriebslagers geringen Innendurchmesser auf, welcher insbesondere 0,5%, 1%, 2% oder 5% geringer ist, um eine sogenannte 'press-fit' Passung zu erreichen. Die Begriffe axial und radial beziehen sich insbesondere auf die Rotorwelle.

Die axial erstreckende Komponente ist bevorzugt radial zwischen dem Antriebslager und/oder dem Nichtantriebslager und dem Gehäuse vorgesehen und/oder erstreckt sich axial über die gleiche oder annähernd gleiche axiale Erstreckung des Antriebslagers und/oder des Nichtantriebslagers. Die Dämpfungselemente liegen bevorzugt berührend an dem Außenring und/oder einer Außenseite des Antriebslagers und/oder des Nichtantriebslager an. Ferner erstrecken sich die Dämpfungselemente bevorzugt axial oder senkrecht zur axialen Erstreckung der Rotorwelle. Weiter bevorzugt erstrecken sich die Dämpfungselemente bei einer axialen Erstreckung derselben über die gleiche, annähernd gleiche, wenigstens hälftige oder hälftige axiale Erstreckung des Antriebslagers und/oder des Nichtantriebslagers.

Nach einer bevorzugten Ausgestaltung sind die Dämpfungselemente umlaufend und/oder in regelmäßigen Abständen innen an der sich axial erstreckenden Komponente vorgesehen. Gemäß einer anderen bevorzugten Weiterbildung ist zwischen zwei benachbarten Dämpfungselementen eine sich axial erstreckende Nut vorgesehen und/oder sind die Dämpfungselemente rippenartig gestaltet. Bevorzugt weisen Nut und Dämpfungselement jeweils die gleiche oder annähernd gleiche Breite auf und/oder weist die Nut eine gleiche oder annähernd gleiche Tiefe wie die Breite des Dämpfungselement auf. Das Dämpfungselement kann gegenüber der Antriebsseitenlageraufnahme und/oder der Nichtantriebsseitenlageraufnahme ein härteres Material aufweisen, insbesondere eine höhere unten beschriebene Shore-Härte. Seitenwände der Nuten können in Bezug auf Täler der Nuten abgeflacht sein, beispielsweise in einem Winkel von 15° oder 20°, insbesondere ≤ 30° je Seite. Die Nuten können eine Breite von 3,1 mm haben, eine Tiefe von 1,5 mm haben und/oder sich pro Nut zwischen 4° und 15° und insbesondere über 7,5° erstrecken. Die Breite der Nuten kann sich ebenso aus dem Umfang er Antriebsseitenlageraufnahme und/oder der Nichtantriebsseitenlageraufnahme und Anzahl der Dämpfungselemente, welche beispielsweise zwischen 24 bis 90 je nach Lagergröße variieren können, ergeben. Die Tiefe der Nuten kann abhängig von der Breite der Dämpfungselemente, Härte des Materials der Dämpfungselemente und daraus folgendem Druckverformungsresistenz und Dämpfungsverhalten sein. Ferner kann die Tiefe 30 bis 60% der der Breite sein. Antriebsseitenlageraufnahme und/oder Nichtantriebsseitenlageraufnahme können einen Außendurchmesser von 70 mm, 84 mm oder 90 mm und einen Innendurchmesser von 60 mm, 71 mm oder 80 mm und/oder eine Breite von 20 mm, 25 mm oder 30 mm aufweisen. Grundsätzlich können sich die Abmessungen der Antriebsseitenlageraufnahme und/oder der Nichtantriebsseitenlageraufnahme, insbesondere Innen- und Außendurchmesser und Breite, abhängig von einem jeweiligen gewählten Lager sein. Die Breite kann zwischen Lagerbreite und axialer Dicke der Antriebsseitenlageraufnahme und/oder der Nichtantriebsseitenlageraufnahme plus Dicke des Sicherungsringes und gegebenenfalls des Federringes, insbesondere unter Berücksichtigung der erforderlichen elektrischen Luft- und Kriechstrecken, variieren, beispielsweise Lagerbreite B x Faktor 1,15 bis 2,0 sein. Die Dämpfungselemente und/oder Nuten können sich über 15 mm, 21 mm oder 25 mm erstrecken.

Wenn ein dämpfungselement-freier Bereich bedeutet, dass in diesem Bereich keine Nuten vorgesehen sind und/oder das Antriebslager und/oder das Nichtantriebslager nicht an der Antriebsseitenlageraufnahme und/oder der Nichtantriebsseitenlageraufnahme anliegt, dann kann, nach einer weiteren bevorzugten Ausgestaltung, das Antriebslager und/oder das Nichtantriebslager zum Teil auf einem solchen Dämpfungselement-freien Bereich aufliegen. Der Dämpfungselement-freie Bereich kann sich über 2 mm, 3 mm, 4 mm oder 5 mm oder über Breite des Antriebslagers und/oder des Nichtantriebslagers x Faktor 0,15 bis 0,3 erstrecken. Die Antriebsseitenlageraufnahme und/oder die Nichtantriebsseitenlageraufnahme ist außen bevorzugt eben, insbesondere vollständig eben gestaltet. Der Dämpfungselement-freie Bereich kann einstückig mit einer weiter unten beschriebenen radial erstreckenden Komponente gebildet sein.

Gemäß einer anderen bevorzugten Weiterbildung sind die Dämpfungselemente an dem der Antriebsseite gegenüberliegendem Ende der Antriebsseitenlageraufnahme und/oder an dem der Nichtantriebsseite gegenüberliegendem Ende der Nichtantriebsseitenlageraufnahme rampenartig gestaltet. Durch eine rampenartige Gestaltung lässt sich das Antriebslager und/oder das Nichtantriebslager einfacher in die Antriebsseitenlageraufnahme und/oder die Nichtantriebsseitenlageraufnahme einführen. Die Rampe, insbesondere ausgebildet als Fase, erstreckt sich bevorzugt axial über 4 mm, 5 mm oder 6 mm oder über Faktor 0,1 bis 0,4 x Breite des Dämpfungselementes und/oder ist in Bezug auf die Axiale um 10° bis 30° abgeflacht.

Nach einer weiteren bevorzugten Ausgestaltung weist die Antriebsseitenlageraufnahme und/oder die Nichtantriebsseitenlageraufnahme eine sich von der axial erstreckenden Komponente radial nach innen erstreckende und einer axialen Bewegung der Rotorwelle entgegenwirkenden radiale Komponente auf, welche einstückig mit der sich axial erstreckenden Komponente aus dem flexiblen Material gebildet ist. Die sich radial nach innen erstreckende Komponente ist bevorzugt zwischen der Antriebsseitenlageraufnahme und/oder der Nichtantriebsseitenlageraufnahme und dem Gehäuse vorgesehen. Die sich radial nach innen erstreckende Komponente erstreckt sich bevorzugt über 3 mm, 3,5 mm, 4 mm oder 5 mm und/oder ist in axialer Seitansicht scheibenartig gestaltet, und/oder orientiert sich nach dem Außen- und Innendurchmesser der jeweils vorgesehenen Antriebsseitenlageraufnahme und/oder Nichtantriebsseitenlageraufnahme.

Gemäß einer anderen bevorzugten Weiterbildung ist die sich radial erstreckende Komponente an dem der Antriebsseite zugewandten Ende der Antriebsseitenlageraufnahme und/oder an dem der Nichtantriebsseite zugewandten Ende der Nichtantriebsseitenlageraufnahme angeordnet und/oder liegt axial an dem Gehäuse an. Durch die radial erstreckende Komponente lässt sich die Rotorwelle axial an dem Gehäuse fixieren und/oder in axialer Richtung dämpfen.

Erfindungsgemäß weist die Kreiselpumpe den Sicherungsring auf, wobei der Sicherungsring bevorzugt aus Metall und/oder ringförmig gestaltet ist und/oder der Sicherungsring an dem der Antriebsseite gegenüberliegendem Ende der Antriebsseitenlageraufnahme vorgesehen ist. Der Sicherungsring weist bevorzugt eine Materialdicke von 1 mm, 2 mm oder 3 mm auf und/oder ist in Form einer Scheibe und/oder scheibenartig, oder gemäß DIN 472 gestaltet. Bevorzugt ist der Sicherungsring axial zwischen dem Antriebslager und dem Gehäuse an dem der Antriebsseite gegenüberliegendem Ende der Antriebsseitenlageraufnahme vorgesehen, wobei das Antriebslager bevorzugt axial, und insbesondere berührend, an der Antriebsseite via Antriebsseitenlageraufnahme einerseits an dem Gehäuse und an dem der Antriebsseite gegenüberliegendem Ende der Antriebsseitenlageraufnahme via Sicherungsring andererseits an dem Gehäuse fixiert, insbesondere eingespannt ist. Entsprechend lässt sich durch den Sicherungsring in einfacher Weise eine axiale Fixierung des Antriebslagers und derart der Motorwelle in Bezug auf das Gehäuse erreichen.

Erfindungsgemäß weist die Kreiselpumpe den Federring auf, wobei der Federring bevorzugt aus Federmetall und/oder ringförmig gestaltet ist und/oder der Federring an dem der Nichtantriebsseite zugewandten Ende der Nichtantriebsseitenlageraufnahme vorgesehen ist. Der Federring weist bevorzugt eine Materialdicke von 1 mm, 2 mm, 3 mm oder 5 mm auf und/oder ist in Form einer Scheibe und/oder scheibenartig, und/oder als Federscheibe zur axialer Anstellung von Kugellagern nach DIN 42013 gestaltet. Bevorzugt ist der Federring axial zwischen dem Nichtantriebslager und der Nichtantriebsseitenlageraufnahme vorgesehen, wobei das Nichtantriebslager bevorzugt axial, und insbesondere berührend, einerseits an dem der Nichtantriebsseite gegenüberliegendem Ende der Nichtantriebsseitenlageraufnahme an dem Gehäuse und andererseits mittels Federring an der Nichtantriebsseite an dem Gehäuse fixiert, insbesondere eingespannt ist, so dass die Federkraft das Nichtantriebslager weg von der Nichtantriebsseite mit Federkraft beaufschlagt. Entsprechend lässt sich durch den Federring in einfacher Weise eine axiale Fixierung des Nichtantriebslagers und derart der Motorwelle in Bezug auf das Gehäuse erreichen.

Nach einer weiteren bevorzugten Ausgestaltung umfasst das flexible Material Ethylen-Propylen-Dien-Kautschuk und/oder Gummi und/oder weist eine Härte von ≥ 60 Shore und ≤ 100 Shore oder 80 Shore auf. Als Ethylen-Propylen-Dien-Kautschuke, abgekürzt EPDM, Ethylen-Propylen-Dien; M-Gruppe, werden Terpolymere aus Ethylen, Propylen und einem nicht näher festgelegten Dien bezeichnet. EPDM zählt zu Synthesekautschuken mit gesättigter Hauptkette, insbesondere nach DIN ISO 1629 als M-Gruppe. Handelsübliche EPDM-Kautschuke haben einen Ethylen-Gehalt von 45-75 Gewichts-%. EPDM ist langfristig alterungsbeständig, resistent gegen UV-Strahlung und Ozon, witterungsbeständig, robust, begehbar, thermisch beständig und frostsicher. Alternativ kann das flexible Material ein Elastomer, beispielsweise einen elastomeren Kunststoff, einen thermoplastischen Kunststoff oder einen duroplastischen Kunststoff, oder NBR, HNBR, XNBR, VMQ, PTFE, AU, FKM, FFPM (FFKM) - Perfluorelastomere umfassen. Die Shore-Härte stellt im Allgemeinen einen Werkstoffkennwert für Elastomere und Kunststoffe dar und wird insbesondere wie in den Normen DIN EN ISO 868, DIN ISO 7619-1 und ASTM D2240-00 festgelegt bestimmt.

### Kurze Beschreibung der Zeichnungen

Nachfolgend wird die Erfindung unter Bezugnahme auf die anliegenden Zeichnungen anhand bevorzugter Ausführungsbeispiele näher erläutert.

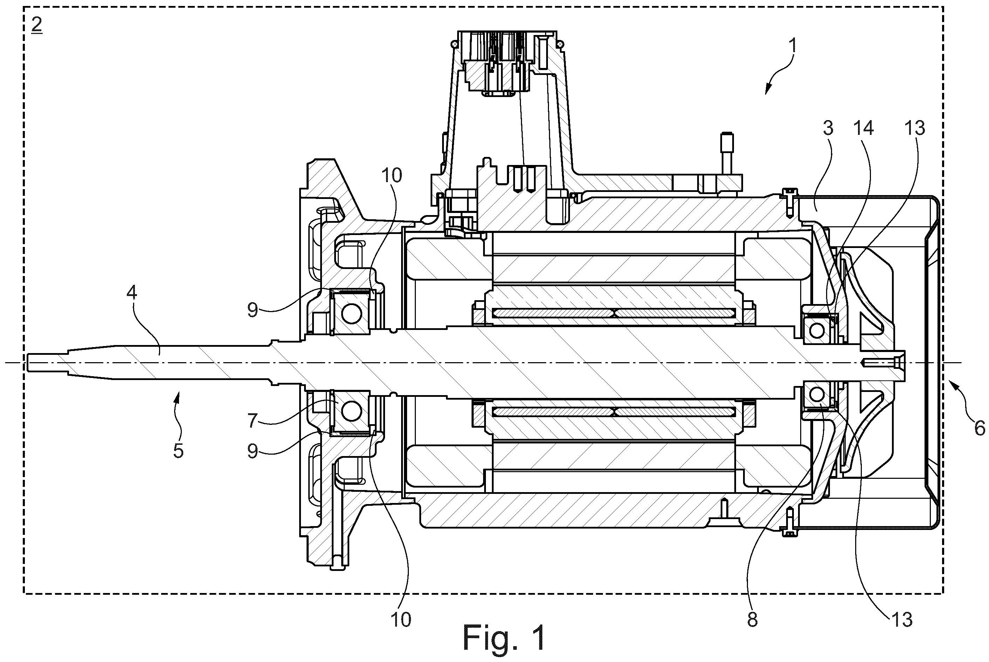

In den Zeichnungen zeigen
- Fig. 1: einen Motor einer Kreiselpumpe in einer schematischen Schnittansicht gemäß einem bevorzugten Ausführungsbeispiel der Erfindung,

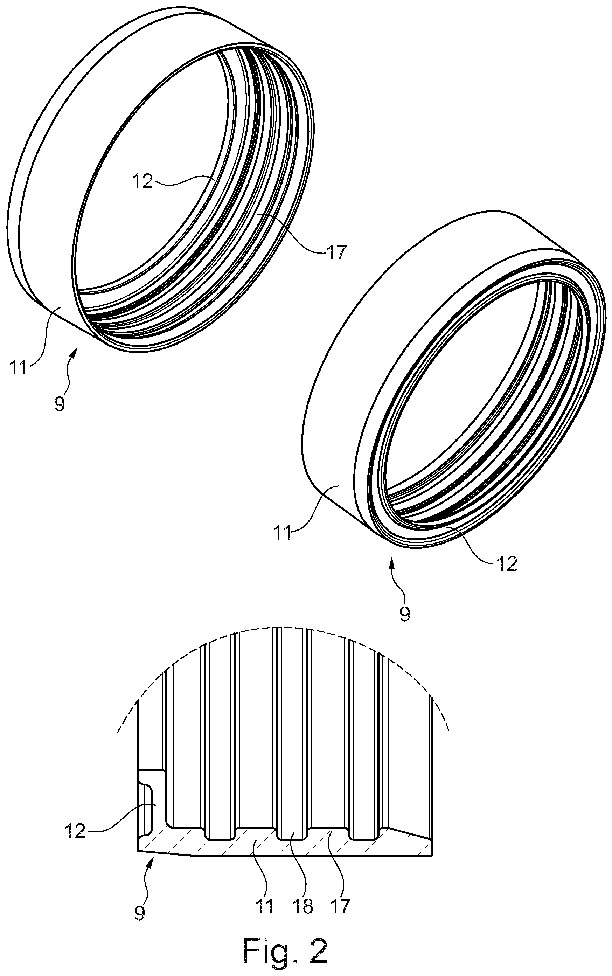

- Fig. 2: eine Antriebsseitenlageraufnahme des Motor aus Fig. 1 in drei Detailansichten, oben links perspektivisch in Richtung eines antriebsseitiges Endes einer Rotorwelle des Motors, oben rechts perspektivisch in Richtung von dem antriebsseitigen Ende der Rotorwelle auf ein Gehäuse des Motors und unten im Teilschnitt mit links hin zum antriebsseitigen Ende der Rotorwelle gemäß dem bevorzugten Ausführungsbeispiel der Erfindung,

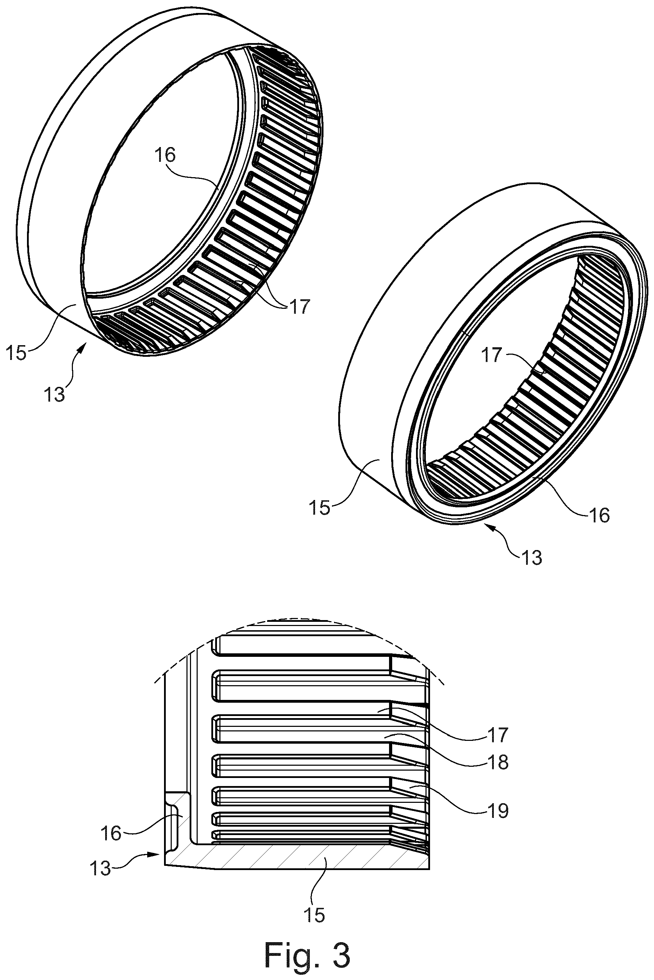

- Fig. 3: eine Nichtantriebsseitenlageraufnahme des Motor aus Fig. 1 in drei Detailansichten, oben links perspektivisch in Richtung nichtantriebsseitigem Ende der Rotorwelle, oben rechts perspektivisch in Richtung von dem nichtantriebsseitigen Ende der Rotorwelle auf das Gehäuse und unten im Teilschnitt mit links hin zum nichtantriebsseitigen Ende der Rotorwelle gemäß dem bevorzugten Ausführungsbeispiel der Erfindung, und

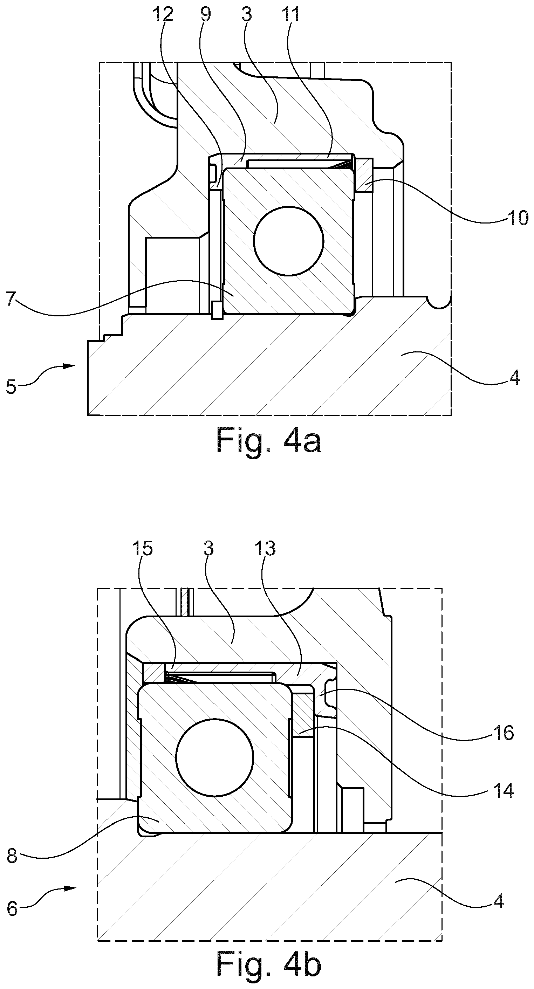

- Fig. 4: in der Fig. 4a ein Antriebslager des Motors aus Fig. 1 in einer Detailansicht und in der Fig. 4b. ein Nichtantriebsseitenlager des Motors aus Fig. 1 in einer Detailansicht gemäß dem bevorzugten Ausführungsbeispiel der Erfindung.

### Detaillierte Beschreibung der Ausführungsbespiele

Fig. 1 zeigt einen Motor 1 einer Kreiselpumpe 2 in einer schematischen Schnittansicht gemäß einem bevorzugten Ausführungsbeispiel der Erfindung. Der Motor 1 weist ein Gehäuse 3 und eine in dem Gehäuse 3 angeordnete Rotorwelle 4 zum Antreiben eines nicht gezeigten Laufrades der Kreiselpumpe 2 an einer Antriebsseite 5 der Rotorwelle 4 auf. Gegenüberliegend zu der Antriebsseite 5 weist die Rotorwelle 4 eine Nichtantriebsseite 6 auf.

Ferner weist der Motor 1 ein an der Antriebsseite 5 angeordnet Antriebslager 7 auf, mittels welchem die Rotorwelle 4 an der Antriebsseite 5 drehbar an dem Gehäuse 3 gelagert ist. Analog ist an der Nichtantriebsseite 6 ein Nichtantriebslager 8 vorgesehen, durch welches die Rotorwelle 4 an der Nichtantriebsseite 6 drehbar an dem Gehäuse 3 gelagert ist. Antriebslager 7 und Nichtantriebslager 8 sind vorliegend als Wälzlager, nämlich als Rillenkugellager ausgebildet.

Radial sowie axial zwischen dem Antriebslager 7 und dem Gehäuse 3 ist dem antriebsseitigen Ende der Rotorwelle 4 zugewandt eine Antriebsseitenlageraufnahme 9 vorgesehen, durch welche die Rotorwelle 4 und das Gehäuse 3 thermisch entkoppelt sind. Die Antriebsseitenlageraufnahme 9 ist im Detail dargestellt in Fig. 2, oben links perspektivisch in Richtung des antriebsseitigem Ende der Rotorwelle 4, oben rechts perspektivisch in Richtung von dem antriebsseitigen Ende der Rotorwelle 4 auf das Gehäuse 3 und unten im Teilschnitt mit links hin zum antriebsseitigen Ende der Rotorwelle 4. Ferner ist zwischen dem Antriebslager 7 an der dem antriebsseitigem Ende der Rotorwelle 4 abgewandten Seite des Antriebslagers 7 und dem Gehäuse 3 ein ringförmiger Sicherungsring 10 aus Metall vorgesehen, welcher sich nur radial jedoch nicht axial bezogen auf die Rotorwelle 4 erstreckt.

Die Antriebsseitenlageraufnahme 9 weist, wie im Detail aus Fig. 2 zu erkennen, eine sich axial erstreckende Komponente 11 sowie eine sich radial erstreckende Komponente 12 auf, die entsprechend rechtwinklig zueinander angeordnet sind und an ihren Innenseiten das Antriebslager 7 berührend aufnehmen. Wie aus Figs. 1 und Fig. 4a zu erkennen, erstreckt sich die axiale Komponente 11 im Wesentlichen über die gesamte axiale Erstreckung des Antriebslagers 7, während sich die radiale Komponente 12 nur über einen Teil der radialen Erstreckung des Antriebslagers 7 vom äußeren Rand des Antriebslagers 7 hin zu der Motorwelle 4 erstreckt. Derart ist das Antriebslager 7 an der Antriebsseite 5 radial sowie axial außen an dem Gehäuse 3 berührend gehalten, wie auch in Fig. 4a gezeigt.

Ferner ist radial und axial zwischen dem Nichtantriebslager 8 und dem Gehäuse 3 dem nichtantriebsseitigen Ende der Rotorwelle 4 zugewandt eine Nichtantriebsseitenlageraufnahme 13 vorgesehen, durch welche die Rotorwelle 4 und das Gehäuse 3 thermisch entkoppelt sind. Die Nichtantriebsseitenlageraufnahme 13 ist im Detail dargestellt in Fig. 3, oben links perspektivisch in Richtung nichtantriebsseitigem Ende der Rotorwelle 4, oben rechts perspektivisch in Richtung von dem nichtantriebsseitigen Ende der Rotorwelle 4 auf das Gehäuse 3 und unten im Teilschnitt mit links hin zum nichtantriebsseitigen Ende der Rotorwelle 4.

Zudem ist zwischen dem Nichtantriebslager 8 an der dem nichtantriebsseitigem Ende der Rotorwelle 4 zugewandten Seite des Antriebslagers 7 und dem Gehäuse 3 ein ringförmiger Federring 14 aus Federmetall vorgesehen, welcher sich nur radial jedoch nicht axial bezogen auf die Rotorwelle 4 erstreckt. Die Federkraft des Federrings 14 beaufschlagt die Rotorwelle 4 in Richtung der Antriebsseite 5. Da die Rotorwelle 4 sowohl an der Antriebsseite 5 als auch an der Nichtantriebsseite 6 jeweils axial an dem Antriebslager 7 und an dem Nichtantriebslager 8 anliegt, ist die Rotorwelle 4 durch den Federring 14 axial in dem Gehäuse 3 fixiert.

Die Nichtantriebsseitenlageraufnahme 13 weist, wie im Detail aus Fig. 3 zu erkennen, ebenso wie die Antriebsseitenlageraufnahme 9 eine sich axial erstreckende Komponente 15 sowie eine sich radial erstreckende Komponente 16 auf, die entsprechend rechtwinklig zueinander angeordnet sind und an ihren Innenseiten das Nichtantriebslager 8 berührend aufnehmen. Wie aus Figs. 1 und 4b zu erkennen, erstreckt sich die axiale Komponente 15 im Wesentlichen über die gesamte axiale Erstreckung des Nichtantriebslagers 8, während sich die radiale Komponente 16 nur über einen Teil der radialen Erstreckung des Nichtantriebslagers 8 vom äußeren Rand des Nichtantriebslagers 8 hin zu der Motorwelle 4 erstreckt. Derart ist das Nichtantriebslager 8 an der Nichtantriebsseite 6 radial sowie axial außen an dem Gehäuse 3 berührend gehalten. Der Federring 14 ist zwischen der radialen Komponente 16 der Nichtantriebsseitenlageraufnahme 13 und der Nichtantriebsseite 6 zugewandten Seite des Nichtantriebslagers 8 derart zwischen dem Nichtantriebslager 8 und dem Gehäuse 3 angeordnet.

Die sich axial erstreckenden Komponenten 11, 15 der Antriebsseitenlageraufnahme 9 und der Nichtantriebsseitenlageraufnahme 13 weisen innen eine Mehrzahl an dem Antriebslager 7 bzw. dem Nichtantriebslager 8 berührend anliegender, einer radialen Bewegung der Rotorwelle 4 entgegenwirkender Dämpfungselemente 17 auf. Die Dämpfungselemente 17 sind umlaufend in regelmäßigen Abständen innen an der sich axial erstreckenden Komponente 11, 15 vorgesehen, wobei zwischen zwei benachbarten Dämpfungselementen 17 jeweils eine Nut 18 vorgesehen ist, so dass die Dämpfungselemente 17 derart rippenartig gestaltet sind. Während in Fig. 2 sich die Dämpfungselemente 17 und derart auch die Nuten 18 der Antriebsseitenlageraufnahme 9 in radialer Richtung erstrecken, sind in Fig. 3 Dämpfungselemente 17 und Nuten 18 der Nichtantriebsseitenlageraufnahme 13 gezeigt, die sich in axialer Richtung erstrecken.

Der Antriebsseitenlageraufnahme 9 ist an der Antriebsseite 5 und die Nichtantriebsseitenlageraufnahme 13 ist an der Nichtantriebsseite 6 jeweils Dämpfungselement-frei ausgeführt, also ohne Nuten 18 oder dergleichen. Ferner sind die Antriebsseitenlageraufnahme 9 und die Nichtantriebsseitenlageraufnahme 13 kreisrund und hohlzylinderartig mit einer flachen, sich axial restreckenden Außenseite ausgeführt, ohne dass Vertiefungen oder dergleichen an der radialen Außenseite vorhanden sind.

Zum leichteren Einführen des Antriebslagers 7 in die Antriebsseitenlageraufnahme 9 sowie des Nichtantriebslagers 8 in die Nichtantriebsseitenlageraufnahme 13 sind die Dämpfungselemente 17 an dem der Antriebsseite 5 gegenüberliegendem Ende der Antriebsseitenlageraufnahme 9, nicht gezeigt, und an dem der Nichtantriebsseite 6 gegenüberliegendem Ende der Nichtantriebsseitenlageraufnahme 13 mit Rampen 19 versehen. Antriebsseitenlageraufnahme 9 und Nichtantriebsseitenlageraufnahme 13 sowie deren axiale und radiale Komponenten 11, 12, 15, 16 sind aus einem flexiblen, nicht leitfähigen Material gestaltet, nämlich aus Ethylen-Propylen-Dien-Kautschuk mit einer Härte 80 Shore.

Die beschriebenen Ausführungsbeispiels sind lediglich Beispiele, die im Rahmen der Ansprüche auf vielfältige Weise modifiziert und/oder ergänzt werden können. Solange es in den Schutzbereich der Ansprüche fällt, kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Solange es in den Schutzbereich der Ansprüche fällt, kann jedes Merkmal, dass für ein Ausführungsbeispiel einer bestimmten Kategorie beschrieben wurde, auch in entsprechender Weise in einem Ausführungsbeispiel einer anderen Kategorie eingesetzt werden.

### Bezugszeichenliste

| | |
|---|---|
| Motor | 1 |
| Kreiselpumpe | 2 |
| Gehäuse | 3 |
| Rotorwelle | 4 |
| Antriebsseite | 5 |
| Nichtantriebsseite | 6 |
| Antriebslager | 7 |
| Nichtantriebslager | 8 |
| Antriebsseitenlageraufnahme | 9 |
| Sicherungsring | 10 |
| Axiale Komponente | 11 |
| Radiale Komponente | 12 |
| Nichtantriebsseitenlageraufnahme | 13 |
| Federring | 14 |
| Axiale Komponente | 15 |
| Radiale Komponente | 16 |
| Dämpfungselement | 17 |
| Nut | 18 |
| Rampe | 19 |

## Patentansprüche

1. Kreiselpumpe (2) mit
einem Motor (1) aufweisend ein Gehäuse (3) und eine darin angeordnete Rotorwelle (4) mit einer Antriebsseite (5) und einer gegenüberliegenden Nichtantriebsseite (6),
einem der Antriebsseite (5) zugeordneten und als Wälzlager ausgebildeten Antriebslager (7) zum drehbaren Lagern der Rotorwelle (4), einer radial zwischen dem Antriebslager (7) und dem Gehäuse (3) vorgesehenen Antriebsseitenlageraufnahme (9) zum thermischen Entkoppeln der Rotorwelle (4) und des Gehäuses (3), und einem Sicherungsring (10), welcher zwischen dem Antriebslager (7) und dem Gehäuse (3) angeordnet ist, und
einem der Nichtantriebsseite (6) zugeordneten und als Wälzlager ausgebildeten Nichtantriebslager (8) zum ebensolchen drehbaren Lagern der Rotorwelle (4), einer radial zwischen dem Nichtantriebslager (8) und dem Gehäuse (3) vorgesehenen Nichtantriebsseitenlageraufnahme (13) zum thermischen Entkoppeln der Rotorwelle (4) und des Gehäuses (3), und einem Federring (14), welcher zwischen dem Nichtantriebslager (8) und dem Gehäuse (3) angeordnet ist und dessen Federkraft die Rotorwelle (4) in Richtung der Antriebsseite (5) beaufschlagt, wobei
die Antriebsseitenlageraufnahme (9) und die Nichtantriebsseitenlageraufnahme (13) eine sich wenigstens axial erstreckende Komponente (11, 15) aus einem flexiblen, nicht leitfähigen Material aufweist, und
an der sich axial erstreckenden Komponente (11, 15) innen eine Mehrzahl an dem Antriebslager (7) und an dem Nichtantriebslager (8) anliegender, einer radialen Bewegung der Rotorwelle (4) entgegenwirkender Dämpfungselemente (17) vorgesehen sind.

2. Kreiselpumpe (2) nach dem vorhergehenden Anspruch, wobei die Dämpfungselemente (17) umlaufend und/oder in regelmäßigen Abständen innen an der sich axial erstreckenden Komponente (11, 15) vorgesehen sind.

3. Kreiselpumpe (2) nach einem der vorhergehenden Ansprüche, wobei zwischen zwei benachbarten Dämpfungselementes (17) eine sich axial erstreckende Nut (18) vorgesehen ist und/oder die Dämpfungselemente (17) rippenartig gestaltet sind.

4. Kreiselpumpe (2) nach einem der vorhergehenden Ansprüche, wobei die Dämpfungselemente (17) an dem der Antriebsseite (5) gegenüberliegendem Ende der Antriebsseitenlageraufnahme (9) und/oder an dem der Nichtantriebsseite (6) gegenüberliegendem Ende der Nichtantriebsseitenlageraufnahme (13) rampenartig gestaltet sind.

5. Kreiselpumpe (2) nach einem der vorhergehenden Ansprüche, wobei die Antriebsseitenlageraufnahme (9) und/oder die Nichtantriebsseitenlageraufnahme (13) eine sich von der axial erstreckenden Komponente (11, 15) radial nach innen erstreckende und einer axialen Bewegung der Rotorwelle (4) entgegenwirkenden radiale Komponente (12, 16) aufweist, welche einstückig mit der sich axial erstreckenden Komponente (11, 15) aus dem flexiblen Material gebildet ist.

6. Kreiselpumpe (2) nach dem vorhergehenden Anspruch, wobei die sich radial erstreckende Komponente (12, 16) an dem der Antriebsseite (5) zugewandten Ende der Antriebsseitenlageraufnahme (9) und/oder an dem der Nichtantriebsseite (6) zugewandten Ende der Nichtantriebsseitenlageraufnahme (13) angeordnet ist und/oder axial an dem Gehäuse (3) anliegt.

7. Kreiselpumpe (2) nach einem der vorhergehenden Ansprüche, wobei der Sicherungsring (10) aus Metall und/oder ringförmig gestaltet ist und/oder der Sicherungsring (10) an dem der Antriebsseite (5) gegenüberliegendem Ende der Antriebsseitenlageraufnahme (9) vorgesehen ist.

8. Kreiselpumpe (2) nach einem der vorhergehenden Ansprüche, wobei der Federring (14) aus Federmetall und/oder ringförmig gestaltet ist und/oder der Federring (14) an dem der Nichtantriebsseite (6) zugewandten Ende der Nichtantriebsseitenlageraufnahme (13) vorgesehen ist.

9. Kreiselpumpe (2) nach einem der vorhergehenden Ansprüche, wobei das flexible Material Ethylen-Propylen-Dien-Kautschuk umfasst und/oder eine Härte von ≥ 60 Shore und ≤ 100 Shore oder 80 Shore aufweist.

## Claims

1. A centrifugal pump (2) comprising
a motor (1) having a housing (3) and a rotor shaft (4) arranged therein with a drive side (5) and an opposite non-drive side (6),
a drive bearing (7), which is associated with the drive side (5) and configured as a rolling bearing, for rotatably supporting the rotor shaft (4), a drive-side bearing mount (9), which is provided radially between the drive bearing (7) and the housing (3), for thermally decoupling the rotor shaft (4) and the housing (3), and a securing ring (10), which is disposed between the drive bearing (7) and the housing (3), and
a non-drive bearing (8), which is associated with the non-drive side (6) and is configured as a rolling bearing, likewise for rotatably supporting the rotor shaft (4), a non-drive-side bearing receptacle (13), which is provided radially between the non-drive bearing (8) and the housing (3), for thermally decoupling the rotor shaft (4) and the housing (3), and a spring ring (14), which is disposed between the non-drive bearing (8) and the housing (3) and the spring force of which acts on the rotor shaft (4) in the direction of the drive side (5), wherein
the drive-side bearing mount (9) and the non-drive-side bearing mount (13) has an at least axially extending component (11, 15) made of a flexible, non-conductive material, and
a plurality of damping elements (17) bearing against the drive bearing (7) and against the non-drive bearing (8) and counteracting a radial movement of the rotor shaft (4) are provided internally on the axially extending component (11, 15).

2. The centrifugal pump (2) according to the preceding claim, wherein the damping elements (17) are provided circumferentially and/or at regular distances internally on the axially extending component (11, 15).

3. The centrifugal pump (2) according to any one of the preceding claims, wherein an axially extending groove (18) is provided between two adjacent damping elements (17) and/or the damping elements (17) are rib-like.

4. The centrifugal pump (2) according to any one of the preceding claims, wherein the damping elements (17) are formed in a ramp-like fashion at the end of the drive-side bearing mount (9) opposite the drive side (5) and/or at the end of the non-drive-side bearing mount (13) opposite the non-drive side (6).

5. The centrifugal pump (2) according to any one of the preceding claims, wherein the drive-side bearing mount (9) and/or the non-drive-side bearing mount (13) has a radial component (12, 16), which extends radially inwardly from the axially extending component (11, 15), counteracts an axial movement of the rotor shaft (4), and is formed in one piece with the axially extending component (11, 15) made of the flexible material.

6. The centrifugal pump (2) according to the preceding claim, wherein the radially extending component (12, 16) is disposed at the end of the drive-side bearing mount (9) facing the drive side (5) and/or at the end of the non-drive-side bearing mount (13) facing the non-drive side (6) and/or bears axially against the housing (3).

7. The centrifugal pump (2) according to any one of the preceding claims, wherein the securing ring (10) is made of metal and/or is annular and/or the securing ring (10) is provided at the end of the drive-side bearing mount (9) opposite the drive side (5).

8. The centrifugal pump (2) according to any one of the preceding claims, wherein the spring ring (14) is made of spring metal and/or is annular and/or the spring ring (14) is provided at the end of the non-drive-side bearing mount (13) facing the non-drive side (6).

9. The centrifugal pump (2) according to any one of the preceding claims, wherein the flexible material comprises ethylene-propylene-diene rubber and/or has a hardness of ≥ 60 Shore and ≤ 100 Shore or 80 Shore.

## Revendications

1. Pompe centrifuge (2) comprenant
un moteur (1) ayant un carter (3) et un arbre de rotor (4) agencé au sein de celui-ci avec un côté entraînement (5) et un côté non entraînement opposé (6),
un palier d'entraînement (7), qui est associé au côté entraînement (5) et configuré en tant que palier à roulement, pour soutenir en rotation l'arbre de rotor (4), une monture de palier côté entraînement (9), qui est pourvue de manière radiale entre le palier d'entraînement (7) et le carter (3), pour découpler thermiquement l'arbre de rotor (4) et le carter (3), et un anneau de fixation (10), qui est disposé entre le palier d'entraînement (7) et le carter (3), et
un palier de non entraînement (8), qui est associé au côté non entraînement (6) et est configuré en tant que palier à roulement, également pour soutenir en rotation l'arbre de rotor (4), un réceptacle de palier côté non entraînement (13), qui est pourvu de manière radiale entre le palier de non entraînement (8) et le carter (3), pour découpler thermiquement l'arbre de rotor (4) et le carter (3), et un anneau-ressort (14), qui est disposé entre le palier de non entraînement (8) et le carter (3) et dont la tension de ressort agit sur l'arbre de rotor (4) dans la direction du côté entraînement (5), dans laquelle
la monture de palier côté entraînement (9) et la monture de palier côté non entraînement (13) ont un constituant s'étendant au moins de manière axiale (11, 15) fabriqué en un matériau souple non conducteur, et
une pluralité d'éléments d'amortissement (17) appuyant contre le palier d'entraînement (7) et contre le palier de non entraînement (8) et contrebalançant un mouvement radial de l'arbre de rotor (4) sont pourvus de manière interne sur le constituant s'étendant de manière axiale (11, 15).

2. Pompe centrifuge (2) selon la revendication précédente, dans laquelle les éléments d'amortissement (17) sont pourvus de manière circonférentielle et/ou à des intervalles réguliers de manière interne sur le constituant s'étendant de manière axiale (11, 15).

3. Pompe centrifuge (2) selon l'une quelconque des revendications précédentes, dans laquelle une rainure s'étendant de manière axiale (18) est pourvue entre deux éléments d'amortissement adjacents (17) et/ou les éléments d'amortissement (17) sont en forme de nervures.

4. Pompe centrifuge (2) selon l'une quelconque des revendications précédentes, dans lequel les éléments d'amortissement (17) sont façonnés en forme de rampe à l'extrémité de la monture de palier côté entraînement (9) opposée au côté d'entraînement (5) et/ou à l'extrémité de la monture de palier côté non entraînement (13) opposée au côté non entraînement (6).

5. Pompe centrifuge (2) selon l'une quelconque des revendications précédentes, dans laquelle la monture de palier côté entraînement (9) et/ou la monture de palier côté non entraînement (13) a un constituant radial (12, 16), qui s'étend de manière radiale vers l'intérieur depuis le constituant s'étendant de manière axiale (11, 15), contrebalance un mouvement axial de l'arbre de rotor (4), et est façonné d'un seul tenant avec le constituant s'étendant de manière axiale (11, 15) fabriqué en le matériau souple.

6. Pompe centrifuge (2) selon la revendication précédente, dans laquelle le constituant s'étendant de manière radiale (12, 16) est disposé au niveau de l'extrémité de la monture de palier côté entraînement (9) faisant face au côté entraînement (5) et/ou au niveau de l'extrémité de la monture de palier côté non entraînement (13) faisant face au côté non entraînement (6) et/ou s'appuie de manière axiale contre le carter (3).

7. Pompe centrifuge (2) selon l'une quelconque des revendications précédentes, dans laquelle l'anneau de fixation (10) est fabriqué en métal et/ou est annulaire et/ou l'anneau de fixation (10) est pourvu au niveau de l'extrémité de la monture de palier côté entraînement (9) opposée au côté entraînement (5).

8. Pompe centrifuge (2) selon l'une quelconque des revendications précédentes, dans laquelle l'anneau-ressort (14) est fabriqué en un métal de ressort et/ou est annulaire et/ou l'anneau-ressort (14) est pourvu au niveau de l'extrémité de la monture de palier côté non entraînement (13) faisant face au côté non entraînement (6).

9. Pompe centrifuge (2) selon l'une quelconque des revendications précédentes, dans laquelle le matériau souple comprend un caoutchouc éthylène-propylène-diène et/ou a une dureté de ≥ 60 Shore et ≤ 100 Shore ou de 80 Shore.
